(19) Europäisches Patentamt
European Patent Office
Office européen des brevets

(11) Veröffentlichungsnummer: **0 031 063**
**A2**

(12) # EUROPÄISCHE PATENTANMELDUNG

(21) Anmeldenummer: **80107697.7**

(22) Anmeldetag: **06.12.80**

(51) Int. Cl.$^3$: **C 08 G 77/10**
C 08 G 77/08

(30) Priorität: **21.12.79 DE 2951801**

(43) Veröffentlichungstag der Anmeldung:
**01.07.81 Patentblatt 81/26**

(84) Benannte Vertragsstaaten:
**BE DE FR GB**

(71) Anmelder: **BAYER AG**
**Zentralbereich Patente, Marken und Lizenzen.**
**D-5090 Leverkusen 1, Bayerwerk(DE)**

(72) Erfinder: **Finke, Ulrich, Dr.**
**Schöllbronnerstrasse 83**
**D-7505 Ettlingen(DE)**

(72) Erfinder: **Moretto, Hans-Heinrich, Dr.**
**Formesstrasse 13**
**D-5000 Köln 80(DE)**

(54) **Verfahren zur Herstellung von Äquilibrierungsprodukten von Organosiloxanen.**

(57) Die vorliegende Erfindung betrifft ein Verfahren zur Herstellung von Äquilibrierungsprodukten von Organosiloxanen durch Umlagerung von Siloxanbindungen an einem Kationenaustauscherharz, wobei das als Organosiloxan bzw. Organisiloxangemisch eingesetzte Ausgangsmaterial bei einer Temperatur von etwa 0°C bis etwa 225°C mit einem fluorhaltigen, kationenaustauschenden Polymeren mit Sulfonylgruppen enthaltenden Seitenketten als ionenaustauschende Stellen, wobei die Sulfonylgruppen jeweils an ein mindestens ein Fluoratom tragendes Kohlenstoffatom gebunden sind, in Kontakt gebracht werden.

EP 0 031 063 A2

Croydon Printing Company Ltd.

BAYER AKTIENGESELLSCHAFT 509 Leverkusen, Bayerwerk

Zentralbereich
Patente, Marken und Lizenzen Br-by-c

# Verfahren zur Herstellung von Äquilibrierungsprodukten von Organosiloxanen

Die vorliegende Erfindung betrifft ein Verfahren zur Herstellung von äquilibrierten Organopolysiloxanen durch Umlagerung von Siloxanen unter Verwendung eines Kationenaustauschers, bei dem die Sulfonsäuregruppe an ein C-Atom gebunden ist, welches seinerseits mindestens ein Fluoratom besitzt.

Es ist bekannt, daß Organopolysiloxane durch Umlagerungsreaktionen hergestellt werden können, wobei die Silicium-Sauerstoff-Silicium-Bindungen praktisch willkürlich umgelagert werden. Umlagerungsreaktionen von Organopolysiloxanen werden durch starke Basen und starke Säuren katalysiert. Die durch starke Säuren und starke Basen katalysierten Siloxan-Umlagerungen werden häufig bei der technischen Herstellung von Organopolysiloxanen mit höherem Molekulargewicht aus Organosiloxanen mit niedrigerem Molekulargewicht und umgekehrt verwendet.

Die bisher verwendeten Katalysatoren sind starke Basen, wie die Alkalimetallbasen (z.B. Lithiumoxid, Natriumhydroxid, Kaliumalkoxide, Kaliumsilanolate, Cäsiumhydroxid usw.), die quaternären Basen, wie Tetraalkylammoniumhydroxide und -alkoxide und Tetraalkylphosphoniumhydroxide und -alkoxide und dergl. sowie starke Säuren, wie die komplexen Lewis-Säuren, Halogenwasserstoffsäuren, Schwefelsäure, Borsäure, Trifluormethylsulfonsäure u. dgl. Es wurden ebenfalls als geeignete Katalysatoren für die Umlagerung von Siloxanbindungen bestimmte Säuren auf Trägern vorbeschrieben, wie mit Säure behandelter Kohlenstoff, mit Säure behandelte Silicate, mit Säure behandelte Tone und synthetische "gelartige" Kationenaustauscherharze. Auch makrovernetzte Kationenaustauscherharze mit einem bestimmten Porenvolumen wurden bereits vorgeschlagen.

Jeder der obengenannten Katalysatoren weist jedoch Verfahrensbeschränkungen auf, die überraschenderweise vermieden werden können, wenn der erfindungsgemäße Katalysator eingesetzt wird.

Gegenstand der vorliegenden Erfindung ist nun ein Verfahren zur Herstellung von Äquilibrierungsprodukten von Organosiloxanen durch Umlagerung von Siloxanbindungen an einem Kationenaustauscherharz, dadurch gekennzeichnet, daß das als Organosiloxan bzw. Organosiloxangemisch eingesetzte Ausgangsmaterial bei einer Temperatur von etwa 0°C bis etwa 225°C mit einem fluorhaltigen, kationenaustauschenden Polymeren mit Sulfonylgruppen enthaltenden Seitenketten als ionenaustauschende Stellen, wobei die Sulfonylgruppen jeweils an ein mindestens ein Fluoratom tragendes Kohlenstoffatom gebunden sind, in Kontakt gebracht wird.

Die erfindungsgemäßen Kationenaustauscher gehören nicht in die Klasse der makroporösen Kationenaustauscher, da sie nicht das für diese Verbindungsklasse typische mit Quecksilber bestimmbare Porenvolumen besitzen.

Der entscheidende Vorteil des erfindungsgemäßen Verfahrens liegt vor allem darin, daß mit den eingesetzten Katalysatoren eine überaus hohe Reaktivität erzielt wird. Die Äquilibrierung von Dimethylsiloxan erfolgt in Gegenwart der genannten Katalysatoren mit einer Geschwindigkeit, die um etwa den Faktor 10 größer ist als mit den bisher bekannten Kationenaustauschern bzw. anderen bekannten Katalysatoren.

Daher lassen sich mit diesen Katalysatoren größere Raum-Zeitausbeuten erzielen und ferner diese bei tieferen Temperaturen (niedrigere Energiekosten) realisieren. Das erfindungsgemäße Verfahren bietet damit erhebliche wirtschaftliche Möglichkeiten. In Temperaturbeständigkeit sowie Chemikalienbeständigkeit ist der neue erfindungsgemäß benutzte Katalysator den makroporösen auf Divinylbenzol/ Styrol-Basis gefertigten Ionenaustauschern ebenfalls überlegen. Diese sind im

Temperaturbereich größer 120°C (max. 150°C) unbrauchbar, da sie ihre Struktur und damit ihre Wirksamkeit verlieren. Das gleiche gilt für ihre Standzeiten, die nur wenige Tage bei Temperaturen von z.B. 100°C betragen. Die erfindungsgemäßen Katalysatoren sind hingegen über Monate bei 100°C beständig.

Der erfindungsgemäße Katalysator bietet gegenüber den "mobilen" Katalysatoren wie z.B. Alkalimetallbasen, KOH, CsOH, quaternären Basen, wie Tetraalkylammoniumhydroxid sowie starken Säuren wie Schwefelsäure, Trifluormethylsulfonsäure den Vorteil der Verfahrensvereinfachung und Kostenersparnis sowie Qualitätsverbesserung des Produktes. Die jeweiligen Katalysatoren erfordern in der Regel den Verfahrensschritt der chemischen Neutralisation die zur Salzbildung führt. Bestimmte Anwendungen von Polyorganosiloxan z.B. die Verwendung als Elektroisolieröle verlangen ein reines, salzfreies Siliconprodukt. Diese Entfernung der durch die Neutralisation entstandenen Salze ist daher notwendig. Verwendet man hingegen die erfindungsgemäßen Katalysatoren, so entfallen der Verfahrensschritte, der Neutralisation und die damit verbundene Salzentfernung. Der erfindungsgemäße Katalysator ist entweder im Reaktor fixiert, oder wird durch Einbauten (Siebe) zurückbehalten. Besonders vorteilhaft lassen sich daher mit ihm kontinuierliche Verfahren betreiben.

Bevorzugtes Anwendungsgebiet ist neben der Darstellung von Polydimethylsiloxanen (Polymerisation und Depolymerisation) die Synthese von Si-H und/oder Si-Vi haltigen Polymerisaten wobei die ersteren durch alkalische Polymerisation nicht zugänglich sind und bisher z.B. mit Schwefelsäure als Katalysator gefertigt wurden.

Die mit dem erfindungsgemäßen Katalysator äquilibrierbaren Organosiloxane umfassen ein weites Feld der Organosiloxane, so lassen sich im Prinzip alle Organosiloxane, die nicht durch Reaktion mit den erfindungsgemäßen Kationenaustaucher zu unerwünschten Nebenreaktionen bzw. zu dessen Passivierung führen, einsetzen.

Mit den erfindungsgemäßen Katalysatoren lassen sich auch neben der äquilibrierenden Reaktion weitere gewünschte Reaktionen wie z.B. Kondensationen von Silanolen realisieren. Hierbei muß durch Temperatureinstellung oder Druckminderung für die Entfernung des entstehenden und die äquilibrierende Wirkung des Katalysators hemmende Wasser gesorgt werden.

Geeignete Katalysatoren, die im erfindungsgemäßen Verfahren eingesetzt werden können, sind z.B. in DE-AS 1 595 071 oder in US-PS 3 041 317, US-PS 3 282 875, US-PS 3 560 568 und US-PS 3 718 627 beschrieben. Ein besonders geeignetes Material ist ein Copolymerisat von Tetrafluorethylen mit Perfluorsulfonylethoxypropylvinylether, das hydrolytisch aus der Säurefluorid-Form in die Sulfonsäure überführt wird. Derartige Produkte werden z.B. unter dem Handelsnamen ® "Nafion" (Fa. DuPont) angeboten.

Die erfindungsgemäß einzusetzenden Katalysatoren können z.B. in Pulverform, in Form von Folien, Schläuchen o.ä. eingesetzt werden.

Die Erfindung ist nicht auf eine bestimmte Gruppe von Organopolysiloxanen beschränkt und ist auf alle Organosiloxane anwendbar, bei denen die Organosiloxane ein Gemisch oder eine Verbindung der Gruppe darstellen, die wenigstens eine Struktur der Formel:

$$(Y)_a SiO_{\frac{4-a}{2}} \qquad (I)$$

aufweisen, wobei Y Wasserstoff, eine substituierte oder unsubstituierte einwertige Kohlenwasserstoffgruppe oder eine zweiwertige Kohlenwasserstoffgruppe ist und a den Wert von 1 bis 3 einschließlich hat. Vorzugsweise enthält Y 1 bis etwa 30 Kohlenstoffatome. Die Gruppen, die durch Y dargestellt werden, können in einer vorgegebenen Siloxaneinheit gleich oder verschieden sein.

Beispiele von unsubstituierten einwertigen Kohlenwasserstoffgruppen Y in Formel I sind Alkenylgruppen (z.B. Vinyl- und Allylgruppen), Alkylgruppen (z.B. Methyl-, Ethyl-, Pentyl- und 2-Ethylhexylgruppen), Arylgruppen (z.B. Phenyl-, 2-Naphthyl-, 2-Anthracyl- und Biphenylgruppen), Cycloalkylgruppen (z.B. Cyclohexyl- und Cyclooctylgruppen), Alkarylgruppen (z.B. 4-Methylphenyl-,

2,4-Diethylphenyl- und 4-Dodecylphenylgruppen), Aralkylgruppen (z.B. Benzyl- und Phenylethylgruppen), Cycloalkenylgruppen (z.B. Cyclohexenylgruppen), Alkoxygruppen (wie Methoxy-, Ethoxy-, Propoxy-, Dodecyloxy- und Isopropoxygruppen), Aryloxygruppen (wie Phenoxy-, Naphthyloxy- und Biphenyloxygruppen) und Acyloxygruppen (wie Acetoxygruppen).

Beispiele für die substituierten einwertigen Kohlenwasserstoffgruppen Y in Formel I sind Alkenyl-, Cycloalkenyl-, Alkyl-, Aryl-, Aralkyl-, Alkaryl- und Cycloalkylgruppen mit Halogen-, Cyan-, Ester- (z.B. Alkoxy-, Aryloxy-, Carbalkoxy- und Acyloxy) oder Epoxy- und Polyoxyalkylensubstituenten. Solche Gruppen Y sind auch Tetrafluorethyl-, Trifluorvinyl-, Chlormethyl-, γ-Chlorpropyl-, β-Carbethoxyethylgruppen, die Gruppe $MeOOC(CH_2)_{10}-$, γ-Carbopropoxypropylgruppen, $CH_3COOCH_2CH_2$-Gruppen, Gruppen

$$CH_2{=}COCOOCH_2CH_2CH_2- \text{ und } CH_2{=}\overset{\displaystyle CH_3}{\overset{|}{C}}-COOCH_2CH_2CH_2-$$

Gruppe.

Beispiele für zweiwertige Kohlenwasserstoffgruppen Y in Formel I sind Alkylengruppen (wie Methylen-, Ethylen-, n-Propylen-, n-Butylen-, 2,2-Dimethyl-1,3-propylen- und Decylengruppen), Arylengruppen (wie Phenylen- und p,p'-Diphenylengruppen), Alkarylengruppen (wie die Phenylethylengruppe) und Alkylenaralkylengruppen (wie die sym.-$CH_2CH_2(C_6H_4)CH_2CH_2$-Gruppe und die sym.-$CH_2C_6H_4CH_2$-Gruppe). Vorzugsweise ist die zweiwertige Kohlenwasserstoffgruppe eine Alkylengruppe, die 2 bis 4 aufeinanderfolgende Kohlenstoffatome enthält.

Wie bereits erwähnt, ist die Erfindung nicht auf eine bestimmte Klasse oder Gruppe von Organopolysiloxanen beschränkt, sondern breit auf alle Klassen und Typen anwendbar, wie solche, die durch die Formel:

$$X_m\overset{Z_n}{Si}O_{\frac{4-m-n}{2}} \qquad (II)$$

gedeckt werden, wobei X ein Wasserstoffatom oder aus der Gruppe der einwertigen Kohlenwasserstoffgruppen mit 1 bis 18 Kohlenstoffatomen und der substituierten einwertigen Kohlenwasserstoffgruppen mit 1 bis 18 Kohlenstoffatomen, die mit einer der folgenden Gruppen substituiert sein kann: Mercapto-, Carboxy-, Carboalkoxy-, Alkenyloxy-, Epoxy- und Cyangruppen-, Fluor-, Chlor- oder Bromatome, Polyoxyalkylen-, Alkoxy- und Aryloxygruppen ausgewählt ist, Z aus der Gruppe -X und -OX ausgewählt ist, wobei X die vorstehende Bedeutung hat, m eine ganze Zahl von 0 bis 3, n eine ganze Zahl von 0 bis 3 und m + n eine ganze Zahl von 1 bis 3 sind und X und Z in jeder Einheit und in jedem Molekül gleich oder verschieden sein können.

Die erfindungsgemäß Organopolysiloxane enthalten in ihren Molekülen Einheiten $-SiO_3$, $=SiO_{2/2}$ und $=SiO_{1/2}$ und Gruppen der Formel II oder Gemische von zwei oder mehr solcher Einheiten. Diese Organopolysiloxane können auch vierwertige Einheiten $SiO_{4/2}$ zusätzlich zu den genannten Einheiten aufweisen.

Typische Gruppen X sind Alkylgruppen (z.B. Methyl-, Ethyl-, Pentyl-, Dodecyl-, Octadecyl- und 2-Ethylhexylgruppen), Arylgruppen (wie Phenyl-, 2-Naphthyl-, 2-Anthracyl- und Biphenylgruppen), Alkarylgruppen (wie 4-Methylphenyl-, 2,4-Diethylphenyl- und 4-Dodecylphenylgruppen), Aralkylgruppen (wie Benzyl-, ß-Phenylethyl-, ß-Phenylpropyl-, γ-Phenylpropyl-, δ-Phenylbutyl-, ß-Phenylbutyl-, ortho-Methylphenylethyl-, para-tertiär-Butylphenylethyl- und para-Ethylphenylethylgruppen), Alkoxygruppen (wie Methoxy-, Ethoxy-, Propoxy-, Dodecyloxy- und Isopropoxygruppen), Aryloxygruppen (wie Phenoxy-, Naphthyloxy- und Biphenyloxygruppen), Acyloxygruppen (wie Methacyloxygruppen); oder substituierte Alkylgruppen, z.B. ß-Cyanethyl-, ß-[(Polyoxyethylen)ethoxy]-ethyl-, ß-Phenoxyethyl-, ß-Phenylethyl-, ß-Phenyl-n-propyl-, 3,3-Dimethyl-n-butyl-, 3,3,3-Trifluorpropyl-, ß-Cyanpropyl-, γ-t-Butoxypropyl- und γ-Cyan-α-methyl-n-butylgruppen; Cycloalkylgruppen, z.B. Cyclopentyl-, Cyclohexyl-, Cycloheptylgruppen, Alkenyl- und substituierte Alkenylgruppen, z.B. Vinyl-, Alkyl-, ß-Phenylvinyl- und 3-Cyclohexenylgruppen; substituierte Arylgruppen, z.B. 4-Cyanphenyl- und Dibromphenylgruppen; substituierte

Alkarylgruppen, z.B. 4-Trifluormethylphenylgruppen und substituierte Alkaralkylgruppen, wie die ß-(Trifluormethylphenyl)ethylgruppe.

Typische hydrolysierbare Gruppen Z sind Alkoxygruppen (wie Methoxy-, Ethoxy-, Propoxy-, Dodecyloxy- und Isopropoxygruppen), Aryloxygruppen (wie Phenoxy-, Naphthyloxy- und Biphenyloxygruppen) und Acyloxygruppen (wie Acetoxygruppen).

Insbesondere sind erfindungsgemäß zur Umlagerung brauchbare Organosiloxane in einem breiten Bereich von linearen und cyclischen Verbindungen oder deren Gemischen zu finden, wie

(a) lineare Verbindungen $R_3Si(OSiR_2)_pOSiR_3$, wobei R Wasserstoff oder ein einwertiger organischer Rest, wie eine Alkyl-, Arylalkyl-, Alkylaryl-, Alkenyl-, Alkoxy-, Acyloxy- oder Organosiloxygruppe ist und p den Wert 0 hat oder eine positive ganze Zahl ist und

(b) cyclische Verbindungen der Formel $(R_2SiO)_q$, in der q eine positive ganze Zahl größer als 2 ist und R die genannte Bedeutung hat.

Beispiele von Gruppen R, die erfindungsgemäß brauchbare Siloxane aufweisen, sind Wasserstoff und organische Reste, wie Alkylgruppen (z.B. Methyl-, Ethyl-, Pentyl-, Dodecyl-,

Octadecyl- und 2-Ethylhexylgruppen), Arylgruppen (wie Phenylgruppen), Aralkylgruooen (wir die Phenylmethylgruppe), Alkoxygruppen (wie Methoxy-, Ethoxy-, Propoxy-, Dodecyloxy- und Isopropoxygruppen), Aryloxygruppen (wie Phenoxy), Acyloxygruppen (wie die Methacryloxygruppe) und Organosiloxygruppen, wie Dimethylsiloxy- und Trimethylsiloxygruppen.

Insbesondere umfassen erfindungsgemäß brauchbare Organosiloxane lineare und cyclische Verbindungen und deren Gemische oder ein Glied der Gruppe aus folgenden Verbindungen:

(a) lineare Verbindungen der Formel

$$R'_3Si(OSiR'_2)_pOSiR'_3$$

in der R Wasserstoff oder ein einwertiger substituierter oder unsubstituierter Kohlenwasserstoffrest mit 1 bis 18 Kohlenstoffatomen und p 0 oder eine positive ganze Zahl ist und

(b) cyclische Verbindungen der allgemeinen Formel

$$(R'_2SiO)_q$$

in der q eine positive ganze Zahl größer als 2 ist und R' die genannte Bedeutung hat.

Beispiele von geeigneten Gruppen R' sind Alkylgruppen (z.B. Methyl-, Ethyl-, Pentyl-, Dodecyl-, Octadecyl- und 2-Ethylhexylgruppen), Arylgruppen (wie Phenyl-, 2-Naphthyl-, 2-Anthracyl- und Biphenylgruppen), Alkarylgruppen (wie 4-Methylphenyl-, 2,4-Diethylphenyl- und 4-Dodecylphenylgruppen) und Aralkylgruppen (wie Phenylmethylgruppen).

Beispiele von R' sind auch die genannten Gruppen R' mit Halogenatomen oder Mercaptogruppen als Substituenten.

Die erfindungsgemäß brauchbaren Organosiloxane sind vorzugsweise frei von Siloxyesterbindungen, wie Silylalkoxy- oder Silylacyloxygruppen, können jedoch gegebenenfalls solche Gruppen enthalten.

Bezüglich des Molekulargewichts der erfindungsgemäß brauchbaren Organosiloxane besteht keine Beschränkung. Die einzige praktische Begrenzung des eingespeisten Gemisches besteht in der Viskosität, die ein Strömen durch ein evtl. vorliegendes Harzbett erlauben soll, wobei hohe Druckverluste über dem Querschnitt vermieden werden sollen. Die Viskosität kann natürlich durch richtige Zumessung des Lösungsmittels gesteuert werden. Es wurde gefunden, daß Einspeisungsgemische von Organosiloxanen mit Viskositäten bis zu etwa 10 000 cP praktische Ergebnisse ergeben und Viskositäten (bis zu) über 10 000 cP, als in dem Verfahren nicht brauchbar angesehen werden, es aber nicht notwendigerweise sind.

Die Verfahrensbedingungen zur Durchführung der Erfindung sind nicht in engen Grenzen kritisch. Bei Atmosphärendruck liegt die Umsetzungstemperatur von etwa 0 bis etwa 225°C. Niedrigere Temperaturen können gegebenenfalls verwendet werden, ergeben jedoch keinen wesentlichen Vorteil. Die Reaktion kann bei Atmosphärendrucke durchgeführt werden, jedoch können gegebenenfalls auch Drücke oberhalb oder unterhalb Atmosphärendruck verwendet werden.

Die Siloxanumlagerung ist ein umkehrbarer Prozeß, d.h. daß Organopolysiloxane mit niedrigem Molekulargewicht in Hochpolymere überführbar sind und Hochpolymere zu Siloxanverbindungen mit einem niedrigen Polymerisationsgrad umgekehrt überführt werden. Solche Umlagerungen werden in Gegenwart eines geeigneten Umlagerungskatalysators fortgesetzt, bis ein Gleichgewichtsgemisch verschiedener Siloxane gebildet worden ist. Z.B. enthalten solche Gleichgewichtsgemische bei Systemen, die hauptsächlich aus Diorganosiloxyeinheiten mit oder ohne Triorganosiloxyeinheiten bestehen, im allgemeinen eine relativ kleine Menge cyclischer Siloxane sowie lineare Siloxane mit höherem Molekulargewicht. Jedoch variiert das Mengenverhältnis von cyclischen Siloxanen im Gleichgewichtsgemisch von System zu System, was größtenteils von der Art der organischen Substituenten am Siliciumatom des umzulagernden Siloxans abhängt. Solange Stoffe, die katalytisch auf die Umlagerung wirken, im System verbleiben, schaffen cyclische

Siloxane, die aus dem System entfernt werden, eine Störung im Gleichgewicht und eine weitere Umlagerung tritt auf, die zur Ergänzung der entfernten Menge cyclischer Stoffe beiträgt und erneut ein Gleichgewicht einstellt. Kontinuierliche Entfernung der cyclischen Stoffe kann gegebenenfalls den größten Teil oder praktisch die Gesamtmenge des Siloxans im System verbrauchen. Die Verdünnung des Systems mit einem Lösungsmittel begünstigt ebenfalls die Bindung cyclischer Stoffe im Gleichgewichtsgemisch. Wenn andererseits der Katalysator inaktiv wird, wenn das Gleichgewichtsgemisch erreicht ist oder während der Umlagerung vor oder nach dem Erreichen des Gleichgewichtsgemisches können relativ niedrig siedende Stoffe einschließlich cyclischer Stoffe durch Extraktion mit einem Lösungsmittel, durch Ausspülen oder durch Abstreifen im Vakuum ohne weitere Bildung von cyclischen Stoffen entfernt werden.

Hochmolekulare Organopolysiloxane können in solvatisierter Form depolymerisiert werden. Die Abnahme der Siloxankonzentration einer Einspeisung durch Zugabe eines Verdünnungsmittels ergibt einen Anstieg im Verhältnis der cyclischen umgelagerten Strukturen zu den linearen umgelagerten Strukturen. Mit steigenden Verhältnissen cyclischer zu linearer Strukturen wird weiterhin das mittlere durchschnittliche Molekulargewicht der linearen umgelagerten Organopolysiloxane abnehmen.

Die Lösungsmittel, die als Verdünnungsmittel bei dem erfindungsgemäßen Verfahren geeignet sind, sind irgendwelche inerten organischen Lösungsmittel. Das ausgewählte Lösungsmittel hängt von dem verwendeten Organosiloxan ab. Am meisten bevorzugt sind die nicht hygroskopischen organischen Lösungsmittel einschließlich beispielsweise aromatische Kohlenwasserstoffe, wie Xylol, Toluol, Benzol und Naphthalin und aliphatische Kohlenwasserstoffe, wie n-Hexan, n-Octan, n-Nonan, n-Dodecan und Testbenzin. Hygroskopische Lösungsmittel, wie Ether (z.B. Diethylether, Di-n-butylether, Tetrahydrofuran und Dioxan), Amide (z.B. N,N-Dimethylformamid und N,N-Dimethylacetamid), Ketone (z.B. Aceton, Dimethylketon, Methylethylketon und Methylisobutylketon), Ester (z.B. Ethylacetat, Isopropylacetat, Isobutylacetat und Methylpropionat) können verwendet werden, wenn geeignete Trocknungs- oder Entwässerungsoperationen vorgesehen werden.

Eine Ausführungsform der Erfindung betrifft die Umlagerung oder genauer die Äquilibrierung von Organopolysiloxanen mit niedrigem Molekulargewicht, insbesondere flüchtigen Organopolysiloxanen, wobei Organosiloxane mit höherem Molekulargeiwcht, wie Öle, gummiartige Produkte und Harze gebildet werden, um die nicht mehr flüchtigen Organopolysiloxane abzutrennen.

Eine andere Ausführungsform der Erfindung betrifft die Umlagerung oder genauer die Depolymerisation von solvatisierten hochmolekularen Organopolysiloxanen, wobei niedrig siedende Organosiloxane, wie flüchtige Stoffe und leichte Öle, gebildet werden. (Die von der Reaktionszone abfließenden Stoffe können destilliert oder fraktioniert werden,) um die flüchtigen Stoffe und/oder die in einem mittleren Bereich siedenden Fraktionen abzutrennen.

Die Erfindung kann leicht in kontinuierlicher Weise durchgeführt werden, wobei das Einspeisungsgemisch aus Organosiloxanen in solvatisierter Form oder als reine Stoffe, deren Temperatur durch Wärmeaustauschvorrichtungen konstant gehalten wird, durch ein horizontales oder vertikales Ionenaustauscherharzbett geleitet wird, in welchem die Siloxanumlagerung stattfindet. Die abfließenden Stoffe werden dann durch chemische Trennungsverfahren, wie dem Abstreifen von Lösungsmittel, die Blitzdestillation, die fraktionierte Destillation und/oder die Lösungsmittelextraktion durchlaufen gelassen, um die Fraktion mit dem gewünschten Produkt abzutrennen. Anschließend werden die nicht gewünschten Fraktionen in den Verfahrenskreislauf zur erneuten Verarbeitung zurückgeführt. Die Regenerierung des Katalysators kann, um die Kontinuität des Verfahrens zu gestatten, gegebenenfalls dadurch bewirkt werden, daß parallele Betten vorgesehen werden, die überbrückt werden können.

Das erfindungsgemäße Verfahren soll anhand der folgenden Beispiele noch näher erläutert werden (%-Angaben bedeuten - soweit nicht anders angegeben ist - Gew.-%).

Als Katalysator dient in den Beispielen ein handelsübliches Produkt (Copolymerisat von Tetrafluorethylen mit Perfluorsulfonylethoxypropylvinylether) erhältlich unter dem Namen ® "Nafion" - Powder 501 der Fa. DuPont. Dieser Katalysator wird durch mehrmalige Behandlung mit 1-n-HCl von der Alkalisalz - in die Säure-Form überführt und nach Waschen mit dest. Wasser bei 80°C im Ölpumpenvakuum getrocknet.

Beispiel 1

Versuch 1: (Vergleich) 5 g eines makroporösen Kationenaustauschers (SPC 118) mit 18 % Divinylbenzoleinheiten und Sulfonsäuregruppen (4,35 m Val/g) wird bei 80°C mit 2,46 g $(Me_3Si)_2O$ und 97,54 g Oktamethylcyclotetrasiloxan versetzt und der Brechungsindex bis zum Äquilibrierungsgleichgewicht verfolgt. Der Brechungsindex ($n_D^{20}$ 1,4041) ist nach 60 Minuten erreicht.

Versuch 2: 0,9 g von ®Nafion Powder 501 $(SO_3H)$ (0,8 m Val/g) werden bei 80°C mit 2,46 g $(Me_3Si)_2O$ und 97,54 g Oktamethylcyclotetrasiloxan versetzt. Der Brechungsindex ($n_D^{20}$ 1,4041) wird ebenfalls nach etwa 60 Minuten erreicht. Die Reaktionsgeschwindigkeit ist damit bei Nafion Powder 501 um den Faktor 30 größer als bei dem geprüften makroporösen Kationenaustauscher.

Beispiel 2

Während 40 Tage wird in einem kontinuierlichen Reaktionsbetrieb bei 100°C in einem Reaktor von 390 $cm^2$ Füllinhalt pro Stunde 70 ml einer Mischung von 2 g $M_2$ (M= $(CH_3)_3$ $SiO_{1/2}$, D = $(CH_3)_2$ SiO, $D^H$ = $CH_3SiHO$; $D^{Vi}$ = $CH_3SiCH{=}CH_2O$, Me = $CH_3$-) und 58 g $D_4$ durchgesetzt. Der Abfall der Katalysatoraktivität (Katalysator siehe Beispiel 1) gemessen an den flüchtigen Anteilen (165°C/2 Torr)

des Reaktionsgemisches steigt nur von 25 % auf 30 %. Unter gleichen Reaktionsbedingungen mit makroporösen Kationenaustauschern ist die Aktivität des Katalysators nach 3 Tagen erschöpft.

Beispiel 3

100 g $HM_2D^H_{5,5}D^{Vi}_{2,2}$ und 62,4 g $D_4$ werden bei 50°C mit 5 g Nafion Powder 501 versetzt und 6 Stunden gerührt. Anschließend wird der Katalysator abfiltriert und die flüchtigen Anteile in Vakuum abgezogen. Das Reaktionsprodukt entspricht in Viskosität, Brechungsindex und chemischen Verhalten den Produkten, die nach dem Verfahren der Perfluoralkansulfonsäureäquilibrierung gefertigt werden. Es ist im Gegensatz zu diesen salzfrei und ohne zusätzliche Neutralisationsschritte gefertigt.

Beispiel 4

Im einem kontinuierlichen Reaktionsbetrieb werden bei 75°C in einem Reaktor von 85 ml Füllinhalt pro Stunde 120 ml eines Gemisches aus Hexamethyldisiloxan und Oktamethylcyclotetrasiloxan im Molverhältnis 1 zu 1000 mit 5 g Katalysator (Nafion Powder 501) eingesetzt. Das Produkt wird bei 160°C/2 Torr von den flüchtigen Anteilen befreit. Der flüchtige Anteil beträgt 40,2 %. Das resultierende Polydimethylsiloxan besitzt eine Viskosität von 166780 mPas was einer Kettenlänge von ca. 1500 Dimethylsiloxyeinheiten entspricht.

Patentansprüche

1) Verfahren zur Herstellung von Äquilibrierungsprodukten von Organosiloxanen durch Umlagerung von Siloxanbindungen an einem Kationenaustauscherharz, dadurch gekennzeichnet, daß das als Organosiloxan bzw. Organisiloxangemisch eingesetzte Ausgangsmaterial bei einer Temperatur von etwa 0°C bis etwa 225°C mit einem fluorhaltigen, kationenaustauschenden Polymeren mit Sulfonylgruppen enthaltenden Seitenketten als ionenaustauschende Stellen, wobei die Sulfonylgruppen jeweils an ein mindestens ein Fluoratom tragendes Kohlenstoffatom gebunden sind, in Kontakt gebracht wird.

2) Verfahren nach Anspruch 1, dadurch gekennzeichnet, daß das Organosiloxan mindestens eine Verbindung der allgemeinen durchschnittlichen Formel

$$Y_aSi(O_{4-a})$$

ist

wobei Y für Wasserstoff oder für einen substituierten oder nicht substituierten ein- oder zweiwertigen Kohlenwasserstoffrest mit bis zu 30 C-Atomen steht, und a 1, 2 oder 3 ist.